# EUROPÄISCHE PATENTSCHRIFT

(11) **EP 3 428 553 B1**
(45) Veröffentlichungstag und Bekanntmachung des Hinweises auf die Patenterteilung: **08.04.2020**
(21) Anmeldenummer: 18176341.8
(22) Anmeldetag: 06.06.2018
(51) Int. Cl.: F25B 31/02, F25B 49/02, H02P 6/00

(54) **HAUSHALTSKÄLTEGERÄT MIT EINEM KÄLTEMITTELKREISLAUF UND VERFAHREN ZUM BETREIBEN EINES HAUSHALTSKÄLTEGERÄTS MIT EINEM KÄLTEMITTELKREISLAUF**
DOMESTIC REFRIGERATION DEVICE WITH A COOLANT CIRCUIT AND METHOD FOR OPERATING A DOMESTIC REFRIGERATION DEVICE WITH A COOLANT CIRCUIT
APPAREIL ÉLECTROMÉNAGER FRIGORIFIQUE POURVU D'UN CIRCUIT D'AGENT RÉFRIGÉRANT ET PROCÉDÉ DE FONCTIONNEMENT D'UN APPAREIL ÉLECTROMÉNAGER FRIGORIFIQUE POURVU D'UN CIRCUIT D'AGENT RÉFRIGÉRANT

(30) Priorität: 30.06.2017 DE 102017211217
(43) Veröffentlichungstag der Anmeldung: 16.01.2019
(73) Patentinhaber: BSH Hausgeräte GmbH, 81739 München (DE)
(72) Erfinder: Klein, Moritz, 89537 Giengen (DE); Mayershofer, Christian, 89355 Gundremmingen (DE); Hoser, Markus, 89344 Aislingen (DE)

(56) Entgegenhaltungen:
- DE-A1-102015 203 144
- DE-A1-102015 215 972
- JP-A- 2005 090 466

## Beschreibung

Die Erfindung betrifft ein Haushaltskältegerät mit einem Kältemittelkreislauf und ein Verfahren zum Betreiben eines Haushaltskältegeräts mit einem Kältemittelkreislauf.

Haushaltskältegeräte umfassen einen kühlbaren Innenraum zum Lagern von Lebensmitteln und einen Kältemittelkreislauf zum Kühlen des kühlbaren Innenraums. Der Kältemittelkreislauf umfasst einen Verdichter, einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist. Der Verdichter umfasst einen elektrischen Motor.

Während des bestimmungsgemäßen Betriebs eines Haushaltskältegerätes wechseln sich Kühlphasen und Standphasen des Kältemittelkreislaufs bzw. des Verdichters ab. Während der Kühlphasen ist der Verdichter in Betrieb, um das Kältemittel des Kältemittelkreislaufs zu verdichten, und während der Standphasen steht der Verdichter bzw. dessen elektrischer Motor still.

Die DE 10 2014 217 006 A1 offenbart ein Verfahren zum Anhalten eines Verdichters des Kältemittelkreislaufs eines Haushaltskältegerätes. Der Verdichter umfasst einen Motor, der sich in einer ersten Drehrichtung dreht und bis zum Stillstand abgebremst wird. Daraufhin wird der Motor in eine zweiten Drehrichtung mit einem vorgegebenen Drehmoment positioniert. DE 10 2015 215 972 A1 offenbart ein Verfahren zum Betreiben eines Haushaltsgerätes, bei dem der Betrieb des Verdichters dahingehend optimiert wird, in dem die Winkelstellung des Rotors relativ zum Stator in Abhängigkeit der elektrischen Strangströme des Drehstrommotors bestimmt wird. DE 10 2015 215 972 A1 offenbart auch ein Haushaltsgerät gemäß dem Oberbegriff des Anspruchs 6.

Aufgabe der Erfindung ist es, ein Verfahren zum Betreiben eines Haushaltskältegeräts mit einem Kältemittelkreislauf anzugeben, um ein verbessertes Anfahren des Verdichters in eine Kühlphase zu erreichen. Eine weitere Aufgabe der Erfindung ist es, ein entsprechend ausgeführtes Haushaltskältegerät anzugeben.

Die Aufgabe der Erfindung wird gelöst durch ein Verfahren zum Betreiben eines Haushaltskältegeräts, das einen wärmeisolierten Korpus mit einem Innenbehälter, der einen zum Lagern von Lebensmitteln vorgesehenen kühlbaren Innenraum begrenzt, einen zum Kühlen des kühlbaren Innenraums vorgesehenen Kältemittelkreislauf mit einem Kältemittel und mit einem Verdichter, und einen elektrischen Antrieb mit einem elektrischen Motor aufweist, wobei der Verdichter eine Verdichterkammer mit einem Einlass und mit einem Auslass, einen innerhalb der Verdichterkammer verschieblich gelagerten Kolben, eine Kurbelwelle, und den elektrischen Motor des elektrischen Antriebs aufweist, wobei der elektrische Motor einen Stator und einen bezüglich des Stators drehbar gelagerten, über die Kurbelwelle mit dem Kolben gekoppelten Rotor umfasst, der elektrische Motor während Kühlphasen des Haushaltskältegerätes mit einer Soll-Drehzahl von wenigstens 800 (in Worten: Achthundert) Umdrehungen pro Minute betrieben wird, um über die Kurbelwelle den Kolben zwischen einem oberen Totpunkt, an dem ein von der Verdichterkammer und dem Kolben eingeschlossenes Volumen zum Verdichten des Kältemittels minimal ist, und einem unteren Totpunkt, an dem das Volumen maximal ist, hin und her zu bewegen, und zwischen den Kühlphasen der Rotor des elektrischen Motors während Standphasen des Verdichters still steht, aufweisend folgende Verfahrensschritte zum Anfahren des Verdichters aus einer Standphase in eine Kühlphase:
- ausgehend vom Stillstand des Verdichters, Betreiben des elektrischen Motors mit einer Anfahr-Soll-Drehzahl, die maximal 5% der der Kühlphase zugeordneten Soll-Drehzahl ist, bis der Kolben über den oberen Totpunkt bewegt wird, und anschließend
- Betreiben des elektrischen Motors, sodass sich dessen Rotor für die Kühlphase mit der der Kühlphase zugeordneten Soll-Drehzahl von wenigstens 800 (in Worten: Achthundert) Umdrehungen pro Minute dreht.

Die Aufgabe der Erfindung wird auch gelöst durch ein Haushaltskältegerät, aufweisend einen wärmeisolierten Korpus mit einem Innenbehälter, der einen zum Lagern von Lebensmitteln vorgesehenen kühlbaren Innenraum begrenzt, einen zum Kühlen des kühlbaren Innenraums vorgesehenen Kältemittelkreislauf mit einem Kältemittel und mit einem Verdichter, einen elektrischen Antrieb mit einem elektrischen Motor, und eine elektrische Steuervorrichtung, wobei der Verdichter eine Verdichterkammer mit einem Einlass und mit einem Auslass, einen innerhalb der Verdichterkammer verschieblich gelagerten Kolben, eine Kurbelwelle, und den elektrischen Motor des elektrischen Antriebs aufweist, der elektrische Motor einen Stator und einen bezüglich des Stators drehbar gelagerten, über die Kurbelwelle mit dem Kolben gekoppelten Rotor umfasst, die elektronische Steuervorrichtung eingerichtet ist, den elektrischen Motor während Kühlphasen des Haushaltskältegerätes mit einer Soll-Drehzahl von wenigstens 800 (in Worten: Achthundert) Umdrehungen pro Minute zu betreiben, um über die Kurbelwelle den Kolben zwischen einem oberen Totpunkt, an dem ein von der Verdichterkammer und dem Kolben eingeschlossenes Volumen zum Verdichten des Kältemittels minimal ist, und einem unteren Totpunkt, an dem das Volumen maximal ist, hin und her zu bewegen, und zwischen den Kühlphasen der Rotor des elektrischen Motors während Standphasen des Verdichters still steht, und die elektronische Steuervorrichtung eingerichtet ist, zum Anfahren des Verdichters aus einer Standphase in eine Kühlphase ausgehend vom Stillstand des Verdichters den elektrischen Motor mit einer Anfahr-Soll-Drehzahl, die maximal 5% der den Kühlphasen zugeordneten Soll-Drehzahl ist, zu betreiben, bis sich der Kolben über den oberen Totpunkt bewegt, und anschließend den elektrischen Motor derart zu betreiben, dass sich dessen Rotor für die Kühlphase mit der der Kühlphase zugeordneten Soll-Drehzahl von wenigsten 800 (in Worten: Achthundert) pro Minute dreht.

Das erfindungsgemäße Haushaltskältegerät umfasst den wärmeisolierten Korpus mit dem Innenbehälter, der den kühlbaren Innenraum begrenzt. Der kühlbare Innenraum ist zum Lagern von Lebensmitteln vorgesehen und wird mittels des Kältemittelkreislaufs gekühlt. Der kühlbare Innenraum kann vorzugsweise mittels eines Türblatts verschlossen werden. Das Türblatt ist vorzugsweise bezüglich einer Achse, die vorzugsweise vertikal verläuft, schwenkbar gelagert. Im geöffneten Zustand ist der kühlbare Innenraum zugänglich.

Der Kältemittelkreislauf umfasst den Verdichter und insbesondere einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist.

Der Verdichter umfasst das von der Verdichterkammer und dem Kolben eingeschlossene Volumen, welches im Betrieb des Verdichters während Kühlphasen durch die Bewegung des Kolbens verkleinert wird, um das Kühlmittel zu verdichten. Die Soll-Drehzahl des elektrischen Motors während der Kühlphasen beträgt mindestens 800 Umdrehungen pro Minute.

Der Kolben ist verschieblich innerhalb der Verdichterkammer gelagert und wird über den Kolben mittels des elektrischen Motors angetrieben. Ein solcher Verdichter wird üblicherweise als Hubkolbenverdichter bezeichnet.

Der elektrische Motor ist insbesondere ein Drehstromsynchronmotor, vorzugsweise ein permanenterregter Drehstromsynchronmotor, wie z.B. ein bürstenloser Gleichstrommotor. Der elektrische Motor des Verdichters ist Teil eines elektrischen Antriebs, welcher neben dem elektrischen Motor z.B. ein als Umrichter ausgeführtes Stellglied zum Ansteuern des elektrischen Motors umfasst.

Der elektrische Antrieb kann ein drehzahlgeregelter elektrischer Antrieb sein. Dann kann es vorgesehen sein, dass die elektronische Steuervorrichtung eingerichtet ist, den elektrischen Motor während der Kühlphasen drehzahlgeregelt mit variabler Soll-Drehzahl zu betreiben.

Gemäß einer Variante des erfindungsgemäßen Verfahrens umfasst dieses ein drehzahlgeregeltes Betreiben des elektrischen Motors während der Kühlphasen insbesondere mit variabler Soll-Drehzahl.

Während der Kühlphasen kann daher z.B. der elektrische Motor mit einer von der elektronischen Steuervorrichtung oder einer Temperaturregelung ermittelten bzw. vorgegebenen Drehzahl betrieben werden. Für ein verbessertes Regelverhalten umfasst der drehzahlgeregelte elektrische Antrieb vorzugsweise eine feldorientierte Regelung. Eine feldorientierte Regelung bildet üblicherweise eine Kaskadenstruktur mit innenliegenden Stromregelkreisen, denen ein äußerer Drehzahlregelkreis überlagert ist.

Während der Kühlphasen wird der Kältemittelkreislauf und somit der elektrische Motor betrieben. Dadurch dreht sich der Rotor relativ zum Stator, wodurch der Kolben innerhalb der Verdichterkammer zwischen dem oberen und dem unteren Totpunkt des Verdichters hin und her bewegt.

Die Verdichterkammer weist den Einlass und den Auslass aus, die insbesondere nebeneinander angeordnet sind. Der Einlass und der Auslass umfassen insbesondere jeweils ein Ventil.

Befindet sich der Kolben im oberen Totpunkt, dann ist das Volumen des Verdichters minimal. Wird nun der Kolben vom oberen Totpunkt zu seinem unteren Totpunkt bewegt, so vergrößert sich das Volumen des Verdichters, wodurch durch den Einlass Kältemittel von der sogenannten Niederdruckseite des Kältemittelkreislaufs in den Verdichter angesaugt wird.

Wird der Kolben von seinem unteren Totpunkt zu seinem oberen Totpunkt bewegt, dann verschließt der Einlass bzw. das dem Einlass zugeordnete Ventil, das insbesondere ein Stoppventil ist, und das im Verdichter bzw. in dessen Verdichterkammer befindliche Kältemittel wird verdichtet. Herrscht zwischen der Verdichterkammer und der dem Auslass der Verdichterkammer nachfolgenden Kältemittelkreislauf, der auch als Hochdruckseite bezeichnet wird, ein vorbestimmter Druckunterschied, so öffnet der Auslass bzw. das dem Auslass zugeordnete Ventil, sodass das verdichtete Kältemittel durch den Auslass in den Kältemittelkreislauf gedrückt wird. Der Auslass bzw. das dem Auslass zugeordnete Ventil öffnet vorzugsweise dann, wenn sich der Kolben im Bereich des oberen Totpunktes befindet. Während des Verdichtens des Kältemittels ist der Einlass bzw. dessen Ventil geschlossen.

Beim Anlauf des Verdichters aus einer Standphase in eine Kühlphase muss der elektrische Motor ein entsprechendes Drehmoment aufbringen, um den Kolben zu bewegen. Da bei der ersten Umdrehung des Rotors des elektrischen Motors noch nicht die dynamisch wirkenden Kräfte des Verdichters wirken, kann dieses Anfahrmotordrehmoment relativ groß sein.

Erfindungsgemäß wird daher ausgehend vom Stillstand des Verdichters zunächst der elektrische Motor mit einer relativ langsamen Drehzahl, betrieben, bis der Kolben über den oberen Totpunkt bewegt wird. Diese langsame Drehzahl, d.h. die Anfahr-Soll-Drehzahl, ist maximal 5% der der Kühlphase zugeordneten Soll-Drehzahl. Beispielsweise ist die Anfahr-Soll-Drehzahl maximal 50 Umdrehungen pro Minute, vorzugsweise maximal 20 Umdrehungen pro Minute. Aufgrund dieser niedrigen Drehzahl bewegt sich der Kolben relativ langsam.

Da vor allem der Einlass, aber auch der Auslass bzw. deren zugeordneten Ventile in der Praxis Leckagen aufweisen können, wird aufgrund der geringen Drehzahl des elektrischen Motors das Kältemittel nicht oder zumindest kaum verdichtet, sondern in den Kältemittelkreislauf, gegebenenfalls durch den Einlass in die Niederdruckseite des Kältemittelkreislaufs gedrückt. Dadurch wird der Verdichter zunächst vom Kältemittel entleert und gegebenenfalls nach dem Entleeren wieder mit einem Kältemittel zumindest teilweise gefüllt. Dieses Kältemittel ist dann aber zunächst nicht oder nur kaum verdichtet, wodurch das weitere Anfahren des Verdichters durch das Betreiben des elektrischen Motors derart, dass sich dessen Rotor für die Kühlphase mit der der Kühlphase zugeordneten Soll-Drehzahl von wenigstens 800 Umdrehungen pro Minute dreht, erleichtert wird.

Somit wird insbesondere beim Anfahren des Verdichters der Kolben insbesondere über eine mögliche Leckage zur Niederdruckseite des Verdichters, die insbesondere nur bei sehr langsam verfahrendem Kolben auftritt, dafür zu nutzen, den Kolben über den oberen Totpunkt hinaus zu bewegen und dadurch die Verdichterkammer zu entleeren. Aus dieser neuen Startposition des Kolbens wird beim ersten Kompressions- bzw. Verdichtungsvorgang eine relativ kleine Kältemenge komprimiert, was ein kleineres Anlaufmoment während der ersten Motorumdrehung zur Folge hat.

Gegebenenfalls kann unmittelbar nach dem Beenden desjenigen Teils der Anfahrphase, in der der elektrische Motor mit der Anfahr-Soll-Drehzahl betrieben wird, und vor dem Betreiben des elektrischen Motors mit der der Kühlphase zugeordneten Soll-Drehzahl von wenigstens 800 Umdrehungen pro Minute der Kolben in eine vorgegebene Stellung gebracht werden, z.B. durch das in der DE 10 2014 217 006 A1 beschriebene Verfahren.

Gemäß einer bevorzugten Ausführungsform des erfindungsgemäßen Haushaltskältegerätes ist die elektronische Steuervorrichtung eingerichtet, den elektrischen Motor während der Kühlphasen derart zu betreiben, dass sich dessen Rotor mit der der Kühlphasen zugeordneten Soll-Drehzahl in eine vorbestimmte Drehrichtung dreht. Dann ist es vorzugsweise vorgesehen, dass die elektronische Steuervorrichtung eingerichtet ist, ausgehend vom Stillstand des Verdichters den elektrischen Motor mit einer Drehrichtung des Rotors entgegen der vorgegebenen Drehrichtung mit der Anfahr-Soll-Drehzahl zu betreiben. In diesem Fall ist das Haushaltskältegerät, insbesondere dessen elektronische Steuervorrichtung vorzugsweise eingerichtet, ausgehend vom Stillstand des Verdichters den elektrischen Motor mit der Anfahr-Soll-Drehzahl zu betreiben, sodass sich der Rotor um mindestens 270° und insbesondere maximal um 360° bewegt. Dadurch kann sichergestellt werden, dass während dieses Teils der Anfahrphase nicht zunächst Kältemittel in die Verdichterkammer angesaugt wird, um diese dann wieder mit langsamer Bewegung aus der Verdichterkammer zu entfernen. Auch wird somit sichergestellt, dass der Kolben über den oberen Totpunkt bewegt wird, um die Verdichterkammer zu entleeren.

Gemäß einer bevorzugten Variante des erfindungsgemäßen Verfahrens wird demnach der elektrische Motor während der Kühlphasen derart betrieben, dass sich dessen Rotor mit der der Kühlphasen zugeordneten Soll-Drehzahl in eine vorbestimmte Drehrichtung dreht, und ausgehend vom Stillstand des Verdichters der elektrischen Motors mit einer Drehrichtung des Rotors entgegen der vorgegebenen Drehrichtung mit der Anfahr-Soll-Drehzahl betrieben.Vorzugsweise wird ausgehend vom Stillstand des Verdichters der elektrische Motor mit der Anfahr-Soll-Drehzahl derart betrieben, dass sich der Rotor um mindestens 270° und insbesondere maximal um 360° bewegt.

Ein Ausführungsbeispiel der Erfindung ist exemplarisch in den beigefügten schematischen Zeichnungen dargestellt. Es zeigen:
- Fig. 1: ein Haushaltskältegerät in einer perspektivischen Darstellung,
- Fig. 2: einen, einen Verdichter aufweisenden Kältemittelkreislauf des Haushaltskältegerätes,
- Fig. 3: den Verdichter,
- Fig. 4: Betriebszustände des Verdichters, und
- Fig. 5: einen elektrischen Antrieb.

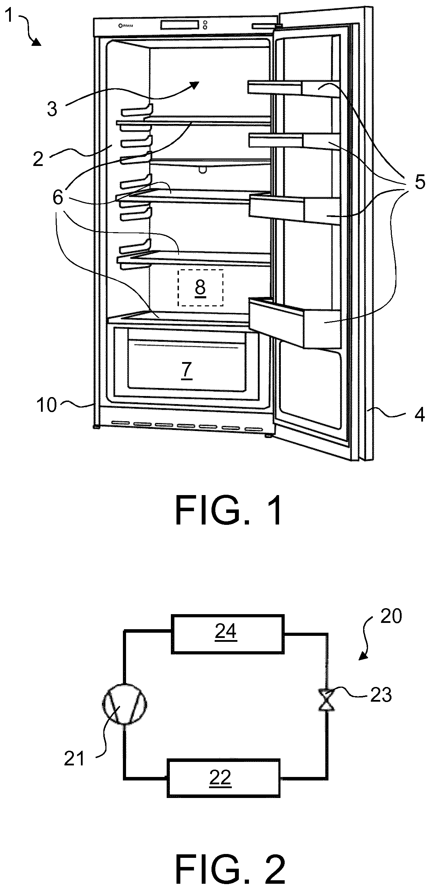

Die Fig. 1 zeigt in einer perspektivischen Darstellung ein Haushaltskältegerät 1, das einen wärmeisolierten Korpus 10 mit einem Innenbehälter 2 umfasst, der einen kühlbaren Innenraum 3 begrenzt. Der kühlbare Innenraum 3 ist zum Lagern von nicht näher dargestellten Lebensmitteln vorgesehen.

Das Haushaltskältegerät 1 weist im Falle des vorliegenden Ausführungsbeispiels ein schwenkbares Türblatt 4 zum Verschließen des kühlbaren Innenraums 3 auf. Das Türblatt 4 ist insbesondere bezüglich einer vertikal verlaufenden Achse schwenkbar gelagert. Bei geöffnetem Türblatt 4, wie in der Fig. 1 dargestellt, ist der kühlbare Innenraum 3 zugänglich.

An der in Richtung kühlbaren Innenraum 3 gerichteten Seite des Türblatts 4 sind im Falle des vorliegenden Ausführungsbeispiels mehrere Türabsteller 5 zum Lagern von Lebensmitteln angeordnet. Im kühlbaren Innenraum 3 sind insbesondere mehrere Fachböden 6 zum Lagern von Lebensmitteln angeordnet und im unteren Bereich des kühlbaren Innenraums 3 ist insbesondere eine Schublade 7 angeordnet, in der ebenfalls Lebensmittel gelagert werden können.

Das Haushaltskältegerät 1 umfasst einen in der Fig. 2 gezeigten Kältemittelkreislauf 20 zum Kühlen des kühlbaren Innenraums 3. Im Falle des vorliegenden Ausführungsbeispiels umfasst der Kältemittelkreislauf 20 ein nicht näher dargestelltes, dem Fachmann im Prinzip jedoch bekanntes Kältemittel, einen Verdichter 21, einen dem Verdichter 21 nachgeschalteten Verflüssiger 22, eine dem Verflüssiger 22 nachgeschaltete Drosselvorrichtung 23, die insbesondere als ein Drossel- oder Kapillarrohr ausgeführt ist, und einen Verdampfer 24, der zwischen der Drosselvorrichtung 23 und dem Verdichter 21 angeordnet ist. Der Verdichter 21 ist vorzugsweise innerhalb eines Maschineraums des Haushaltkältegerätes 1 angeordnet, der sich insbesondere hinter der Schublade 7 befindet.

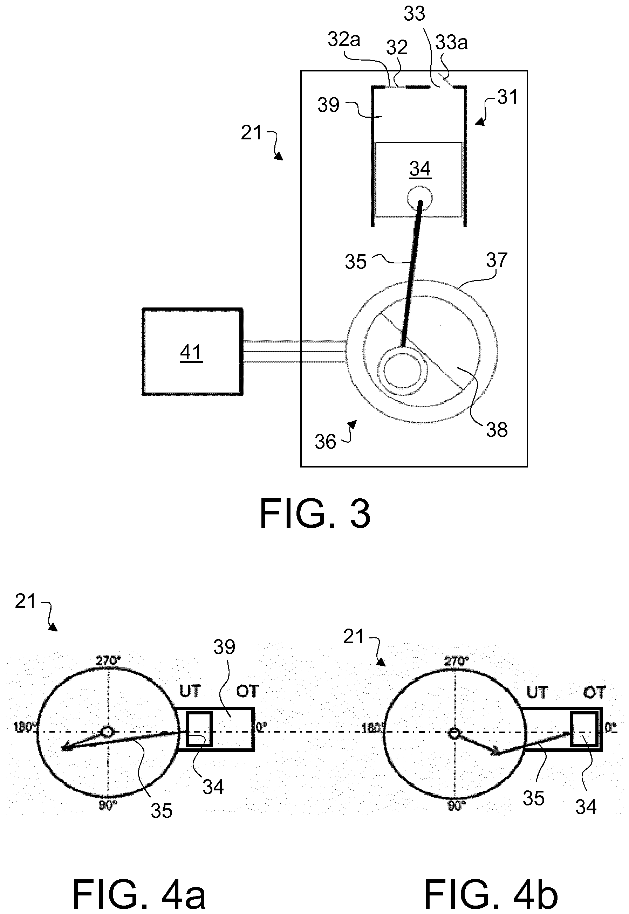

Der Verdichter 21 ist als ein Hubkolbenverdichter ausgeführt und in der Fig. 3 näher dargestellt. Betriebszustände des Verdichters 21 sind in der Fig. 4 veranschaulicht.

Der Verdichter 21 umfasst eine Verdichterkammer 31 mit einem Einlass 32 und mit einem Auslass 33 für das Kältemittel, und einen innerhalb der Verdichterkammer 31 verschieblich gelagerten Kolben 34. Der Einlass 32 und der Auslass 33 sind jeweils mit entsprechenden Ventilen 32a, 33a versehen.

Der Verdichter 21 umfasst eine Kurbelwelle 35 und einen elektrischen Motor 36, der im Falle des vorliegenden Ausführungsbeispiels ein Drehstromsynchronmotor ist. Der Drehstromsynchronmotor ist insbesondere ein permanenterregter Drehstromsynchronmotor, vorzugsweise ein bürstenloser Gleichstrommotor.

Der elektrische Motor 36 umfasst einen Stator 37 und einen relativ zum Stator 37 drehbar gelagerten Rotor 38. Eines der Enden der Kurbelwelle 35 ist mit dem Kolben 34 und das andere Ende der Kurbelwelle 35 ist mit dem Rotor 38 des elektrischen Motors 36 gekoppelt, sodass im bestimmungsgemäßen Betrieb des Haushalskältegerätes 1 bzw. des Verdichters 21 der Kolben 34 mittels des Motors 36 ein von der Verdichterkammer 31 und dem Kolben 34 eingeschlossenes Volumen 39 zum Verdichten des Kältemittels zu verkleinern vermag.

Das Haushaltskältegerät 1 umfasst im Falle des vorliegenden Ausführungsbeispiels eine elektronische Steuervorrichtung 8, die eingerichtet ist, den Kältemittelkreislauf 20, insbesondere den Verdichter 21 des Kältemittelkreislaufs 20 derart anzusteuern, dass der kühlbare Innenraum 3 zumindest in etwa eine vorgegebene oder vorgebbare Soll-Temperatur aufweist. Die elektronische Steuervorrichtung 8 ist vorzugsweise derart eingerichtet, dass sie die Temperatur des kühlbaren Innenraums 3 regelt. Um gegebenenfalls die Ist-Temperatur des kühlbaren Innenraums 3 zu erhalten, kann das Haushaltskältegerät 1 wenigstens einen nicht näher dargestellten und mit der elektronischen Steuervorrichtung 8 verbundenen Temperatursensor aufweisen.

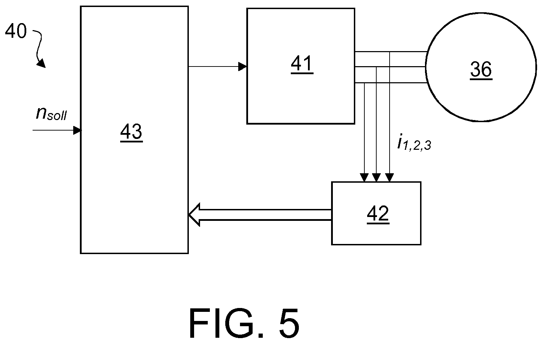

Um den Kältemittelkreislauf 20 anzusteuern bzw. zu regeln, umfasst das Haushaltskältegerät 1 im Falle des vorliegenden Ausführungsbeispiels einen in der Fig. 5 dargestellten geregelten elektrischen Antrieb 40, welcher den elektrischen Motor 36 des Verdichters 21 aufweist. Bei Bedarf wird der elektrische Motor 36 entsprechend einer von der elektronischen Steuervorrichtung 8 vorgegebenen Soll-Drehzahl *nₛₒₗₗ* angetrieben. Die Soll-Drehzahl *nₛₒₗₗ* wird insbesondere von der elektronischen Steuervorrichtung 8 aufgrund einer beabsichtigten Kühlung des kühlbaren Innenraums 3 berechnet bzw. vorgegeben, beispielsweise aufgrund der aktuellen Temperatur und der Soll-Temperatur des kühlbaren Innenraums 3.

Der elektrische Antrieb 40 umfasst ein Stellglied zum Antreiben des Motors 36. Das Stellglied ist als Umrichter 41 ausgeführt und erzeugt im Betrieb des elektrischen Antriebs 40 eine dreiphasige Spannung, die zumindest indirekt abhängig ist von der Soll-Drehzahl *nₛₒₗₗ* des Motors 36.

Im Falle des vorliegenden Ausführungsbeispiels weist der geregelte elektrische Antrieb 40 eine Messvorrichtung 42 auf, mittels derer die elektrischen Strangströme *i*_{*1*,*2,3*} des als Drehstromsynchronmotor ausgeführten elektrischen Motors 36 gemessen werden und die Ist-Drehzahl des Motors 36 ermittelt wird. Die Messvorrichtung 42 bereitet gegebenenfalls die ermittelte Ist-Drehzahl und die gemessenen elektrischen Strangströme *i*_{*1*,*2,3*} des elektrischen Motors 36 auf, sodass die ermittelte Ist-Drehzahl und die gemessenen elektrischen Strangströme *i*_{*1*,*2,3*} des elektrischen Motors 36 von einer Regelung 43 des elektrischen Antriebs 40 in geeigneter Form verarbeitet werden können. Die Ist-Drehzahl kann z.B., wie es beim vorliegenden Ausführungsbeispiels vorgesehen ist, aus den gemessenen Strangströme *i*_{*1*,*2,3*} ermittelt werden. Die Ist-Drehzahl kann aber auch direkt mittels eines entsprechenden Sensors gemessen werden.

Im Falle des vorliegenden Ausführungsbeispiels basiert die Regelung 43 des geregelten elektrischen Antriebs 40 auf einer feldorientierten Regelung. Die feldorientierte Regelung bildet eine Kaskadenstruktur mit innenliegenden Stromregelkreisen, denen ein äußerer Drehzahlregelkreis überlagert ist.

Während einer Kühlung des kühlbaren Innenraums 3, also wahrend einer Kühlphase, wird der Kältemittelkreislauf 20 und somit der elektrische Antrieb 40 bzw. der elektrische Motor 36 mit einer Soll-Drehzahl *n_{soll,K}* größer gleich 800 rpm (Umdrehungen pro Minute) betrieben. Dadurch dreht sich der Rotor 38 relativ zum Stator 37, wodurch der Kolben 34 innerhalb der Verdichterkammer 39 hin und her bewegt wird. Dadurch ändert sich die Position des Kolbens 34 relativ zur Verdichterkammer 39. Je nach Kühlungsbedarf kann im Falle des vorliegenden Ausführungsbeispiels die Soll-Drehzahl *n*_{*soll*,*K*} des elektrischen Motors 36 während der Kühlphase variabel sein.

Während der Kühlphase wird mittels des elektrischen Motors 36 und der Kurbelwelle 35 der Kolben 34 zwischen einem oberen Totpunkt OT, an dem das von der Verdichterkammer 31 und dem Kolben 34 eingeschlossenes Volumen 39 minimal ist, und einem unteren Totpunkt UT, an dem das Volumen 39 maximal ist, hin und her bewegt. Die Stellung des Kolbens 34 am unteren Totpunkt UT ist in der Fig. 4a und die Stellung des Kolbens 34 am oberen Totpunkt OT ist in der Fig. 4b veranschaulicht.

Bewegt der Motor 36 den Kolben 34 von seinem oberen Totpunkt OT zu seinem unteren Totpunkt UT, so erhöht sich das Volumen 39 und der Verdichter 21 saugt Kältemittel durch seinen Einlass 32 ein.

Bewegt der Motor 36 den Kolben 43 von seinem unteren Totpunkt UT zu seinem oberen Totpunkt OT, so verringert sich das Volumen 39 und der Verdichter 21 verdichtet das in der Verdichterkammer 31 befindliche Kältemittel, bis sich der Auslass 33 bzw. dessen Ventil 33a im Bereich des oberen Totpunkts OT öffnet, damit das verdichtete Kältemittel zum Verflüssiger 22 gelangen kann.

Während einer komplettem Bewegung des Kolbens 34, d.h. einer Bewegung des Kolbens 34 derart, dass dieser alle möglichen Positionen relativ zur Verdichterkammer 31 einnimmt, vollzieht der Motor 36 ein komplette Drehung, d.h. der Rotor 38 dreht sich um 360° relativ zum Stator 37.

Zwischen zwei Kühlphasen wird der Verdichter 21 während Standphasen nicht betrieben, d.h. wahrend der Standphasen steht der elektrische Motor 36 still.

Vor allem das dem Einlass 32 zugeordnete Ventil 32a, aber auch das dem Auslass 33 zugeordneten Ventile 33a kann in der Praxis nicht völlig dicht sein, also Leckagen aufweisen.

Beim Anlaufen des Verdichter 21 aus einer Standphase in eine Kühlphase wird im Falle des vorliegenden Ausführungsbeispiels der Verdichter 21 folgendermaßen betrieben.

Ausgehend vom Stillstand des Verdichters 21 wird der elektrische Motor 36 während einer Anfahrphase zunächst derart betrieben, dass dieser den Kolben 34 über den oberen Totpunkt OT bewegt. Dabei wird der elektrische Motor 36 derart angesteuert, dass sich dessen Rotor 38 mit einer Soll-Drehzahl *n_{soll,A}* bewegt, die kleiner gleich 5% der Soll-Drehzahl *n_{soll,K}* während einer Kühlphase ist. Im Falle des vorliegenden Ausführungsbeispiels ist für diesen Abschnitt des Anfahrens des Verdichters 21 die Soll-Drehzahl maximal 50 rpm (Umdrehungen pro Minute), vorzugsweise maximal 20 rpm. Während der Anfahrphase wird der elektrische Antrieb 40 vorzugsweise nur stromgeregelt betrieben. Aufgrund der relativ geringen Drehzahl wird ein sich in der Verdichterkammer 31 befindliches Kältemittel zumindest teilweise ohne nennenswerte Verdichtung insbesondere durch den Einlass 32 aus der Verdichterkammer 31 gedrückt.

Anschließend wird der elektrische Motor 36 derart vorzugsweise im drehzahlgeregelten Betrieb betrieben, dass sich für die Kühlphase der Rotor 38 mit der Soll-Drehzahl *n_{soll,K}* größer gleich 800 rpm dreht.

Im Falle des vorliegenden Ausführungsbeispiels dreht sich der Rotor 38 des elektrischen Motors 36 während der Kühlphase mit der Soll-Drehzahl *n_{soll,K}* größer gleich 800 rpm in eine vorbestimmte Drehrichtung.

Für das Anfahren des Verdichters 21 aus dem Stillstand wird der elektrische Motor 36 vorzugsweise derart angesteuert, dass sich zu Beginn dessen Rotor 38 entgegen der vorbestimmten Drehrichtung mit der langsamen Drehzahl dreht. Insbesondere wird der elektrische Motor 36 derart angesteuert, dass sich der Rotor 38 um mindestens 270° und maximal 360° bewegt.

### BEZUGSZEICHENLISTE

- 1: Haushaltskältegerät
- 2: Innenbehälter
- 3: kühlbarer Innenraum
- 4: Türblatt
- 5: Türabsteller
- 6: Fachböden
- 7: Schublade
- 8: elektronische Steuervorrichtung
- 10: Korpus
- 20: Kältemittelkreislauf
- 21: Verdichter
- 22: Verflüssiger
- 23: Drosselvorrichtung
- 24: Verdampfer
- 31: Verdichterkammer
- 32: Einlass
- 33: Auslass
- 32a, 33a: Ventile
- 34: Kolben
- 35: Kurbelwelle
- 36: elektrischer Motor
- 37: Stator
- 38: Rotor
- 39: Volumen
- 40: elektrischer Antrieb
- 41: Umrichter
- 42: Messvorrichtung
- 43: Regelung
- *i*_{*1*,*2,3*}: Strangströme
- *nₛₒₗₗ*: Soll-Drehzahl
- OT: oberer Totpunkt
- UT: unterer Totpunkt

## Patentansprüche

1. Verfahren zum Betreiben eines Haushaltskältegeräts (1), das einen wärmeisolierten Korpus (10) mit einem Innenbehälter (2), der einen zum Lagern von Lebensmitteln vorgesehenen kühlbaren Innenraum (3) begrenzt, einen zum Kühlen des kühlbaren Innenraums (3) vorgesehenen Kältemittelkreislauf (20) mit einem Kältemittel und mit einem Verdichter (21), und einen elektrischen Antrieb (40) mit einem elektrischen Motor (36) aufweist, wobei der Verdichter (21) eine Verdichterkammer (31) mit einem Einlass (32) und mit einem Auslass (33), einen innerhalb der Verdichterkammer (31) verschieblich gelagerten Kolben (34), eine Kurbelwelle (35), und den elektrischen Motor (36) des elektrischen Antriebs (40) aufweist, wobei der elektrische Motor (36) einen Stator (37) und einen bezüglich des Stators (37) drehbar gelagerten, über die Kurbelwelle (35) mit dem Kolben (34) gekoppelten Rotor (38) umfasst, der elektrische Motor (36) während Kühlphasen des Haushaltskältegerätes (1) mit einer Soll-Drehzahl von wenigstens 800 Umdrehungen pro Minute betrieben wird, um über die Kurbelwelle (35) den Kolben (34) zwischen einem oberen Totpunkt, an dem ein von der Verdichterkammer (31) und dem Kolben (34) eingeschlossenes Volumen (39) zum Verdichten des Kältemittels minimal ist, und einem unteren Totpunkt, an dem das Volumen (39) maximal ist, hin und her zu bewegen, und zwischen den Kühlphasen der Rotor (38) des elektrischen Motors (36) während Standphasen des Verdichters (31) still steht, aufweisend folgende Verfahrensschritte zum Anfahren des Verdichters (31) aus einer Standphase in eine Kühlphase:
- ausgehend vom Stillstand des Verdichters (21), Betreiben des elektrischen Motors (36) mit einer Anfahr-Soll-Drehzahl, die maximal 5% der der Kühlphase zugeordneten Soll-Drehzahl ist, bis der Kolben (23) über den oberen Totpunkt bewegt wird, und anschließend
- Betreiben des elektrischen Motors (36) derart, dass sich dessen Rotor (38) für die Kühlphase mit der der Kühlphase zugeordneten Soll-Drehzahl von wenigstens 800 Umdrehungen pro Minute dreht.

2. Verfahren nach Anspruch 1, bei dem der elektrische Motor (36) während der Kühlphasen derart betreiben wird, dass sich dessen Rotor (38) mit der der Kühlphasen zugeordneten Soll-Drehzahl in eine vorbestimmte Drehrichtung dreht, und ausgehend vom Stillstand des Verdichters (21), Betreiben des elektrischen Motors (36) mit einer Drehrichtung des Rotors (38) entgegen der vorgegebenen Drehrichtung mit der Anfahr-Soll-Drehzahl.

3. Verfahren nach Anspruch 2, bei dem ausgehend vom Stillstand des Verdichters (21), der elektrische Motor (36) mit der Anfahr-Soll-Drehzahl derart betrieben wird, dass sich der Rotor (38) um mindestens 270° und insbesondere maximal um 360° bewegt.

4. Verfahren nach einem der Ansprüche 1 bis 3, bei dem die Anfahr-Soll-Drehzahl maximal 50 Umdrehungen pro Minute, vorzugsweise maximal 20 Umdrehungen pro Minute beträgt.

5. Verfahren nach einem der Ansprüche 1 bis 4, aufweisend drehzahlgeregeltes Betreiben des elektrischen Motors (36) während der Kühlphasen insbesondere mit variabler Soll-Drehzahl.

6. Haushaltskältegerät, aufweisend einen wärmeisolierten Korpus (10) mit einem Innenbehälter (2), der einen zum Lagern von Lebensmitteln vorgesehenen kühlbaren Innenraum (3) begrenzt, einen zum Kühlen des kühlbaren Innenraums (3) vorgesehenen Kältemittelkreislauf (20) mit einem Kältemittel und mit einem Verdichter (21), einen elektrischen Antrieb (40) mit einem elektrischen Motor (36), und eine elektronische Steuervorrichtung (8), wobei der Verdichter (21) eine Verdichterkammer (31) mit einem Einlass (32) und mit einem Auslass (33), einen innerhalb der Verdichterkammer (31) verschieblich gelagerten Kolben (34), eine Kurbelwelle (35), und den elektrischen Motor (36) des elektrischen Antriebs (40) aufweist, der elektrische Motor (36) einen Stator (37) und einen bezüglich des Stators (37) drehbar gelagerten, über die Kurbelwelle (35) mit dem Kolben (34) gekoppelten Rotor (38) umfasst, die elektronische Steuervorrichtung (8) eingerichtet ist, den elektrischen Motor (36) während Kühlphasen des Haushaltskältegerätes (1) mit einer Soll-Drehzahl von wenigstens 800 Umdrehungen pro Minute zu betreiben, um über die Kurbelwelle (35) den Kolben (34) zwischen einem oberen Totpunkt, an dem ein von der Verdichterkammer (31) und dem Kolben (34) eingeschlossenes Volumen (39) zum Verdichten des Kältemittels minimal ist, und einem unteren Totpunkt, an dem das Volumen (39) maximal ist, hin und her zu bewegen, und zwischen den Kühlphasen der Rotor (38) des elektrischen Motors (36) während Standphasen des Verdichters (31) still steht, **dadurch gekennzeichnet, dass** die elektronische Steuervorrichtung (8) eingerichtet ist,
- zum Anfahren des Verdichters (31) aus einer Standphase in eine Kühlphase ausgehend vom Stillstand des Verdichters (21), den elektrischen Motor (36) mit einer Anfahr-Soll-Drehzahl, die maximal 5% der den Kühlphasen zugeordneten Soll-Drehzahl ist, zu betreiben, sodass sich der Kolben (23) über den oberen Totpunkt bewegt, und anschließend
- den elektrischen Motor (36) zu betreiben, bis sich dessen Rotor (38) für die Kühlphase mit der der Kühlphase zugeordneten Soll-Drehzahl von wenigstens 800 Umdrehungen pro Minute dreht.

7. Haushaltskältegerät nach Anspruch 6, **dadurch gekennzeichnet, dass** die elektronische Steuervorrichtung (8) eingerichtet ist, den elektrischen Motor (36) während der Kühlphasen derart zu betreiben, dass sich dessen Rotor (38) mit der der Kühlphasen zugeordneten Soll-Drehzahl in eine vorbestimmte Drehrichtung dreht, und ausgehend vom Stillstand des Verdichters (21) den elektrischen Motor (36) mit einer Drehrichtung des Rotors (38) entgegen der vorgegebenen Drehrichtung mit der Anfahr-Soll-Drehzahl zu betreiben.

8. Haushaltskältegerät nach Anspruch 6 oder 7, **dadurch gekennzeichnet, dass** die elektronische Steuervorrichtung (8) eingerichtet ist, ausgehend vom Stillstand des Verdichters (21), den elektrischen Motor (36) mit der Anfahr-Soll-Drehzahl zu betreiben, sodass sich der Rotor (38) um mindestens 270° und insbesondere maximal um 360° bewegt.

9. Haushaltskältegerät nach einem der Ansprüche 6 bis 8, **dadurch gekennzeichnet, dass** der Einlass (32) und der Auslass (33) an der Verdichterkammer (31) nebeneinander angeordnet sind.

10. Haushaltskältegerät nach einem der Ansprüche 6 bis 9, **dadurch gekennzeichnet, dass** die Anfahr-Soll-Drehzahl maximal 50 Umdrehungen pro Minute, vorzugsweise maximal 20 Umdrehungen pro Minute beträgt, bei dem der elektrische Antrieb (40) ein drehzahlgeregelter elektrischer Antrieb (40) ist und die elektronische Steuervorrichtung (8) eingerichtet ist, den elektrischen Motor (36) während der Kühlphasen mit variabler Soll-Drehzahl zu betreiben.

## Claims

1. Method for operating a household refrigeration appliance (1) having a heat-insulated carcass (10) with an inner container (2), which delimits a coolable interior space (3) provided for storing food, a coolant circuit (20) provided for cooling the coolable interior space (3) with a coolant and with a compressor (21), and an electric drive (40) with an electric motor (36), wherein the compressor (21) has a compressor chamber (31) with an inlet (32) and with an outlet (33), a piston (34) supported movably within the compressor chamber (31), a crankshaft (35), and the electric motor (36) of the electric drive (40), wherein the electric motor (36) comprises a stator (37) and a rotor (38) supported rotatably with respect to the stator (37) and coupled via the crankshaft (35) with the piston (34), the electric motor (36) is operated with a target rotational speed of at least 800 revolutions per minute during cooling phases of the household refrigeration appliance (1) in order, by means of the crankshaft (35), to move the piston (34) back and forth between a top dead centre, at which a volume (39) contained by the compressor chamber (31) and the piston (34) for compressing the coolant is minimal, and a bottom dead centre, at which the volume (39) is maximal, and the rotor (38) of the electric motor (36) stands still during idle phases of the compressor (31), having the following method steps for starting up the compressor (31) from an idle phase to a cooling phase:
- starting from the standstill of the compressor (21), operating the electric motor (36) with a startup target rotational speed that is at most 5% of the target rotational speed assigned to the cooling phase, until the piston (23) is moved above the top dead centre, and then
- operating the electric motor (36) in such a way that, for the cooling phase, its rotor (38) rotates at the target rotational speed of at least 800 revolutions per minute assigned to the cooling phase.

2. Method according to claim 1, in which the electric motor (36) is operated during the cooling phases such that its rotor (38) rotates in a predetermined direction of rotation at the target rotational speed assigned to the cooling phases, and starting from the standstill of the compressor (21), operating the electric motor (36) with a direction of rotation of the rotor (38) that is counter to the predetermined direction of rotation with the startup target rotational speed.

3. Method according to claim 2, in which, starting from the standstill of the compressor (21), the electric motor (36) is operated with the startup target rotational speed such that the rotor (38) moves by at least 270° and in particular by at most 360°.

4. Method according to one of claims 1 to 3, in which the startup target rotational speed is at most 50 revolutions per minute, preferably at most 20 revolutions per minute.

5. Method according to one of claims 1 to 4, having speed-controlled operation of the electric motor (36) during the cooling phases in particular with a variable target rotational speed.

6. Household refrigeration appliance, having a heat-insulated carcass (10) with an inner container (2), which delimits a coolable interior space (3) provided for storing food, a coolant circuit (20) provided for cooling the coolable interior space (3) with a coolant and with a compressor (21), an electric drive (40) with an electric motor (36), and an electronic controller (8), wherein the compressor (21) has a compressor chamber (31) with an inlet (32) and with an outlet (33), a piston (34) supported movably within the compressor chamber (31), a crankshaft (35), and the electric motor (36) of the electric drive (40), the electric motor (36) comprises a stator (37) and a rotor (38) supported rotatably with respect to the stator (37) and coupled via the crankshaft (35) with the piston (34), the electronic controller (8) is configured to operate the electric motor (36) with a target rotational speed of at least 800 revolutions per minute during cooling phases of the household refrigeration appliance (1) in order, by means of the crankshaft (35), to move the piston (34) back and forth between a top dead centre, at which a volume (39) contained by the compressor chamber (31) and the piston (34) for compressing the coolant is minimal, and a bottom dead centre, at which the volume (39) is maximal, and the rotor (38) of the electric motor (36) stands still during idle phases of the compressor (31),
**characterised in that**
the electronic controller (8) is configured,
- in order to start up the compressor (31) from an idle phase to a cooling phase starting from the standstill of the compressor (21), to operate the electric motor (36) with a startup target rotational speed that is at most 5% of the target rotational speed assigned to the cooling phase, so that the piston (23) moves above the top dead centre, and then
- to operate the electric motor (36) until, for the cooling phase, its rotor (38) rotates at the target rotational speed of at least 800 revolutions per minute assigned to the cooling phase.

7. Household refrigeration appliance according to claim 6, **characterised in that** the electronic controller (8) is configured to operate the electric motor (36) during the cooling phases such that its rotor (38) rotates in a predetermined direction of rotation at the target rotational speed assigned to the cooling phases, and starting from the standstill of the compressor (21), to operate the electric motor (36) with a direction of rotation of the rotor (38) that is counter to the predetermined direction of rotation with the startup target rotational speed.

8. Household refrigeration appliance according to claim 6 or 7, **characterised in that** the electronic controller (8) is configured, starting from the standstill of the compressor (21), to operate the electric motor (36) with the startup target rotational speed such that the rotor (38) moves by at least 270° and in particular by at most 360°.

9. Household refrigeration appliance according to one of claims 6 to 8, **characterised in that** the inlet (32) and the outlet (33) are arranged adjacent to one another on the compressor chamber (31).

10. Household refrigeration appliance according to one of claims 6 to 9, **characterised in that** the startup target rotational speed is at most 50 revolutions per minute, preferably at most 20 revolutions per minute, in which the electric drive (40) is a speed-controlled electric drive (40) and the electronic controller (8) is configured to operate the electric motor (36) during the cooling phases with a variable target rotational speed.

## Revendications

1. Procédé de fonctionnement d'un appareil frigorifique (1) à usage domestique qui présente un corps (10) calorifugé doté d'un réservoir intérieur (2) lequel délimite un espace intérieur (3) réfrigérable ménagé pour stocker des aliments, un circuit de refroidissement (20) ménagé pour réfrigérer l'espace intérieur (3) réfrigérable à l'aide d'un agent réfrigérant et d'un compresseur (21), et un entraînement électrique (40) doté d'un moteur électrique (36), le compresseur (21) présentant une chambre de compresseur (31) dotée d'une entrée (32) et d'une sortie (33), un piston (34) logé de manière déplaçable à l'intérieur de la chambre de compresseur (31), un vilebrequin (35) et le moteur électrique (36) de l'entraînement électrique (40), le moteur électrique (36) comprenant un stator (37) et un rotor (38) logé de manière rotative par rapport au stator (37), couplé au piston (34) par l'intermédiaire du vilebrequin (35), le moteur électrique (36) fonctionnant avec une vitesse de rotation théorique d'au moins 800 tours par minute pendant des phases de refroidissement de l'appareil frigorifique (1) à usage domestique afin de déplacer le piston (34) en va et vient par l'intermédiaire du vilebrequin (35) entre un point mort supérieur, auquel un volume (39) enfermé par la chambre de compresseur (31) et le piston (34) pour comprimer l'agent réfrigérant est minimal, et un point mort inférieur, auquel le volume (39) est maximal, et, entre les phases de refroidissement, le rotor (38) du moteur électrique (36) étant arrêté pendant des phases d'arrêt du compresseur (31), présentant les étapes de procédé suivantes pour le démarrage du compresseur (31) à partir d'une phase d'arrêt pour passer en une phase de refroidissement :
- partant de l'arrêt du compresseur (21), mise en fonctionnement du moteur électrique (36) avec une vitesse de rotation théorique de démarrage qui est au maximum de 5% de la vitesse de rotation théorique attribuée à la phase de refroidissement, jusqu'à ce que le piston (23) soit déplacé au-dessus du point mort supérieur, et ensuite
- mise en fonctionnement du moteur électrique (36) de manière à ce que le rotor (38) de ce dernier tourne pour la phase de refroidissement avec la vitesse de rotation théorique attribuée à la phase de refroidissement d'au moins 800 tours par minute.

2. Procédé selon la revendication 1, dans lequel le moteur électrique (36) est mis en fonctionnement pendant les phases de refroidissement de manière à ce que le rotor (38) de ce dernier tourne dans un sens de rotation prédéterminé avec la vitesse de rotation théorique attribuée aux phases de refroidissement, et partant de l'arrêt du compresseur (21), mise en fonctionnement du moteur électrique (36) avec la vitesse de rotation théorique de démarrage avec un sens de rotation du rotor (38) en sens inverse au sens de rotation prédéfini.

3. Procédé selon la revendication 2, dans lequel, partant de l'arrêt du compresseur (21), le moteur électrique (36) est mis en fonctionnement avec la vitesse de rotation théorique de démarrage de manière à ce que le rotor (38) se déplace d'au moins 270° et notamment au maximum de 360°.

4. Procédé selon l'une quelconque des revendications 1 à 3, dans lequel la vitesse de rotation théorique de démarrage est au maximum de 50 tours par minute, de préférence de maximum 20 tours par minute.

5. Procédé selon l'une quelconque des revendications 1 à 4, présentant un fonctionnement à réglage de vitesse du moteur électrique (36) pendant les phases de refroidissement, notamment avec une vitesse de rotation théorique variable.

6. Appareil frigorifique à usage domestique présentant un corps (10) calorifugé doté d'un réservoir intérieur (2) lequel délimite un espace intérieur (3) réfrigérable ménagé pour stocker des aliments, un circuit de refroidissement (20) ménagé pour réfrigérer l'espace intérieur (3) réfrigérable à l'aide d'un agent réfrigérant et d'un compresseur (21), et un entraînement électrique (40) doté d'un moteur électrique (36), et un dispositif de commande (8) électronique, le compresseur (21) présentant une chambre de compresseur (31) dotée d'une entrée (32) et d'une sortie (33), un piston (34) logé de manière déplaçable à l'intérieur de la chambre de compresseur (31), un vilebrequin (35) et le moteur électrique (36) de l'entraînement électrique (40), le moteur électrique (36) comprenant un stator (37) et un rotor (38) logé de manière rotative par rapport au stator (37), couplé au piston (34) par l'intermédiaire du vilebrequin (35), le dispositif de commande (8) électronique étant configuré pour faire fonctionner le moteur électrique (36) avec une vitesse de rotation théorique d'au moins 800 tours par minute pendant des phases de refroidissement de l'appareil frigorifique (1) à usage domestique afin de déplacer le piston (34) en va et vient par l'intermédiaire du vilebrequin (35) entre un point mort supérieur, auquel un volume (39) enfermé par la chambre de compresseur (31) et le piston (34) pour comprimer l'agent réfrigérant est minimal, et un point mort inférieur, auquel le volume (39) est maximal, et, entre les phases de refroidissement, le rotor (38) du moteur électrique (36) étant immobilisé pendant des phases d'arrêt du compresseur (31), **caractérisé en ce que** le dispositif de commande (8) électronique est configuré,
- dans le but de démarrer le compresseur (31) à partir d'une phase d'arrêt pour passer en une phase de refroidissement en partant de l'arrêt du compresseur (21), pour faire fonctionner le moteur électrique (36) avec une vitesse de rotation théorique de démarrage qui est au maximum de 5% de la vitesse de rotation théorique attribuée aux phases de refroidissement, de sorte que le piston (23) se déplace au-dessus du point mort supérieur, et ensuite
- pour faire fonctionner le moteur électrique (36) jusqu'à ce que le rotor (38) de ce dernier tourne pour la phase de refroidissement avec la vitesse de rotation théorique attribuée à la phase de refroidissement d'au moins 800 tours par minute.

7. Appareil frigorifique à usage domestique selon la revendication 6, **caractérisé en ce que** le dispositif de commande (8) électronique est configuré pour faire fonctionner le moteur électrique (36) pendant les phases de refroidissement de manière à ce que le rotor (38) de ce dernier tourne dans un sens de rotation prédéterminé avec la vitesse de rotation théorique attribuée aux phases de refroidissement, et partant de l'arrêt du compresseur (21), pour faire fonctionner le moteur électrique (36) avec la vitesse de rotation théorique de démarrage avec un sens de rotation du rotor (38) en sens inverse au sens de rotation prédéfini.

8. Appareil frigorifique à usage domestique selon la revendication 6 ou 7, **caractérisé en ce que** le dispositif de commande (8) électronique est configuré, partant de l'arrêt du compresseur (21), pour faire fonctionner le moteur électrique (36) avec la vitesse de rotation théorique de démarrage de manière à ce que le rotor (38) se déplace d'au moins 270° et notamment au maximum de 360°.

9. Appareil frigorifique à usage domestique selon la revendication 6 à 8, **caractérisé en ce que** l'entrée (32) et la sortie (33) sont disposées l'une à côté de l'autre sur la chambre de compresseur (31).

10. Appareil frigorifique à usage domestique selon la revendication 6 à 9, **caractérisé en ce que** la vitesse de rotation théorique de démarrage est au maximum de 50 tours par minute, de préférence de maximum 20 tours par minute, dans lequel l'entraînement électrique (40) est un entraînement (40) électrique à réglage de vitesse, et **en ce que** le dispositif de commande (8) électronique est configuré pour faire fonctionner le moteur électrique (36) avec une vitesse de rotation théorique variable pendant les phases de refroidissement.
